# EUROPEAN PATENT APPLICATION

(11) **EP 4 420 990 A1**
(43) Date of publication of application: **28.08.2024**
(21) Application number: 24158889.6
(22) Date of filing: 21.02.2024
(51) Int. Cl.: B65B 35/40, B65B 35/50, B65B 43/14, B65G 21/14, B65G 47/08

(54) **ARTICLE CONVEYANCE DEVICE**

(30) Priority: 24.02.2023 JP 2023026904
(71) Applicant: Ishida Co., Ltd., Kyoto-shi Kyoto 606-8392 (JP)
(72) Inventor: SHIBATA, Daichi, Shiga, 520-3026 (JP); NISHITSUJI, Satoshi, Shiga, 520-3026 (JP); IWASA, Tatsuya, Shiga, 520-3026 (JP); NAKAMURA, Yuichi, Shiga, 520-3026 (JP)
(74) Representative: Kalhor-Witzel, Ronak

(57) **Abstract**

The present disclosure provides an article conveyance device that inhibits disturbances in the aligned orientation of stand-up pouch articles when causing them to stand up.

An article conveyance device 20 includes an article infeed unit 21, an article alignment unit 22, and a control unit 50. The article infeed unit 21 conveys articles in an X1 direction. The article alignment unit 22 is disposed downstream of the article infeed unit 21 in the X1 direction, receives the articles conveyed by the article infeed unit 21, and conveys the articles in a Y1 direction intersecting the X1 direction. The control unit 50 controls conveyance operations of the article infeed unit 21 and article alignment unit 22 to form on a conveyance surface of the article alignment unit 22 an article group where the article that is Nth and the article that is N+1th overlap in a state in which they are offset from each other in the X1 direction and the Y1 direction.

## Description

### BACKGROUND

### Technical Field

The present invention relates to an article conveyance device that conveys articles while aligning them.

### Related Art

As a system that packs articles in boxes, there is, for example, a box packing system that utilizes the article conveyance device disclosed in patent document 1 (JP-A No. 2010-155648).

In this box packing system, plates are pushed from both sides against plural articles conveyed and accumulated in a predetermined place, and the plural articles are aligned by causing them to stand up and then they are packed in boxes.

### SUMMARY

### Technical Problem

However, in a case where the articles are stand-up pouch bags having bottoms in their lower ends to allow them to stand up on their own, the upper end portions of the bags are thinner than the lower end portions, so when the bags are stood up on one lateral side of the bags, the bags spread out in the shape of a fan and the aligned orientation of the articles becomes disturbed, thereby hindering the box packing operation.

Therefore, an article conveyance device that inhibits disturbances in the aligned orientation of stand-up pouch articles when causing them to stand up is desired.

### Solution to Problem

An article conveyance device of a first aspect includes a first conveyance unit, a second conveyance unit, and a control unit. The first conveyance unit conveys articles in a first direction. The second conveyance unit is disposed downstream of the first conveyance unit in the first direction, receives the articles conveyed by the first conveyance unit, and conveys the articles in a second direction intersecting the first direction. The control unit controls conveyance operations of the first conveyance unit and the second conveyance unit to form on a conveyance surface of the second conveyance unit an article group where the article that is Nth and the article that is N+1th overlap in a state in which they are offset from each other in the first direction and the second direction.

In this article conveyance device, even when the articles are articles whose upper end portions are thinner than their lower end portions such as stand-up pouch articles, the articles are offset from each other in the first direction, whereby the thick portions of the articles that are adjacent to the thin portions of the articles overlap in a state in which the articles are aligned and accumulated as the article group, so the orientation of the articles when the articles stand up is stable, and a collapse in orientation during box packing is inhibited.

An article conveyance device of a second aspect is the article conveyance device pertaining to the first aspect, wherein the first conveyance unit is an extendible and retractable shuttle conveyor. The control unit forms the article group on the conveyance surface by causing a conveyance terminal end portion of the first conveyance unit to extend and retract parallel to the first direction.

In this article conveyance device, the landing positions of the articles on the second conveyance unit differ between a case where a timing of retracting the conveyance terminal end portion of the first conveyance unit is early and a case where the timing is late. This can be utilized to overlap the articles in a state in which they are offset from each other in the first direction.

An article conveyance device of a third aspect is the article conveyance device pertaining to the second aspect, wherein the control unit controls the extension and retraction amount of the conveyance terminal end portion to adjust the offset amount in the first direction between the article that is the Nth and the article that is the N+1th.

An article conveyance device of a fourth aspect is the article conveyance device pertaining to the first aspect, wherein the control unit forms the article group on the conveyance surface of the second conveyance unit by varying the speed at which the first conveyance unit conveys the articles.

In this article conveyance device, the faster the conveyance speed is, the faster the discharge speed of the articles discharged from the conveyance terminal end portion of the first conveyance unit becomes. Therefore, the landing positions of the articles on the second conveyance unit differ between a case where the discharge speed of the articles discharged from the conveyance terminal end portion of the first conveyance unit is slow and a case where it is fast. This can be utilized to overlap the articles in a state in which they are offset from each other in the first direction.

An article conveyance device of a fifth aspect is the article conveyance device of the first aspect, further including a guide unit. The guide unit guides the articles by reciprocating along and parallel to the first direction over the conveyance surface of the second conveyance unit.

In this article conveyance device, the positions to which the guide unit guides the articles and causes them to land on the second conveyance unit differs between a case where the guide unit is sticking out over the conveyance surface of the second conveyance unit and a case where it is not. This can be utilized to overlap the articles in a state in which they are offset from each other in the first direction.

An article conveyance device of a sixth aspect is the article conveyance device of any one of the first aspect to the fifth aspect, wherein the offset amount in the first direction between the article that is the Nth and the article that is the N+1th is 20% or more of the length of the articles.

In this article conveyance device, in the case of articles whose upper end portions are thinner than their lower end portions such as stand-up pouch articles, the articles are offset from each other 15% or more of the length of the articles in the first direction, whereby the thick portions of the articles that are adjacent to the thin portions of the articles overlap in a state in which the articles are aligned and accumulated as the article group, so the orientation of the articles when the articles stand up is stable, and a collapse in orientation during box packing is inhibited.

An article conveyance device of a seventh aspect is the article conveyance device of any one of the first aspect to the fifth aspect, wherein the control unit switches between either of a first state and a second state in accordance with a product selection pertaining to the articles. The first state is a state in which the article that is the Nth and the article that is the N+1th are offset from each other in the first direction and the second direction. The second state is a state in which the article that is the Nth and the article that is the N+1th are offset from each other only in the second direction.

In this article conveyance device, the control unit automatically switches between the first state and the second state in accordance with the product, so there are no switching mistakes.

An article conveyance device of an eighth aspect is the article conveyance device of any one of the first aspect to the fifth aspect, further including a stand-up unit. The stand-up unit is disposed downstream of the second conveyance unit in the second direction and causes the article group to stand up by sandwiching, from its front and rear, the article group conveyed by the second conveyance unit.

In this article conveyance device, the article group where the article that is the Nth and the article that is the N+1th overlap in a state in which they are offset from each other in the first direction and the second direction is formed, so the orientation of the article group is inhibited from collapsing when the articles are made to stand up by sandwiching them.

An article conveyance device of a ninth aspect is the article conveyance device of the eighth aspect, further including a push unit. The push unit pushes off the article group stood up by the stand-up unit in a direction in which it causes the article group to leave the stand-up unit.

In this article conveyance device, the article group where the article that is the Nth and the article that is the N+1th overlap in a state in which they are offset from each other in the first direction and the second direction is formed, so the orientation of the article group is inhibited from collapsing when, for example, the articles are pushed in order to pack them in a box.

An article conveyance device of a tenth aspect is the article conveyance device of any one of the first aspect to the fifth aspect, wherein the articles have bags with a shape whose thickness on the upstream side is thinner than its thickness on the downstream side in the first direction.

An article conveyance device of an eleventh aspect is the article conveyance device of any one of the first aspect to the fifth aspect, wherein the control unit further controls the conveyance operations of the first conveyance unit and the second conveyance unit to form on the conveyance surface of the second conveyance unit the article group where the article that is the N+1th and the article that is N+2th are offset from each other in the first direction and the second direction, the articles that are the Nth and the N+2th are in positions that substantially coincide with each other in the first direction, and the articles that are the Nth to the N+2th are alternately offset from each other in the first direction and overlap.

### Advantageous Effects of the Invention

In the article conveyance device pertaining to the present invention, even when the articles are articles whose upper end portions are thinner than their lower end portions such as stand-up pouch articles, the articles are offset from each other in the first direction, whereby the thick portions of the articles that are adjacent to the thin portions of the articles overlap in a state in which the articles are aligned and accumulated as the article group, so the orientation of the articles when the articles stand up is stable, and a collapse in orientation during box packing is inhibited.

### BRIEF DESCRIPTION OF THE DRAWINGS#

FIG. 1 is a perspective view showing a flow of cardboard boxes and articles in a box packing system equipped with an article conveyance device pertaining to an embodiment of the invention;
FIG. 2A is a front elevation view seen from a horizontal direction orthogonal to a conveyance direction of an aligned group of bags;
FIG. 2B is a front elevation view of a state in which the aligned group of bags of FIG. 2A has been stood up;
FIG. 3 is a perspective view of an infeed conveyor, a first alignment conveyor, and a second alignment conveyor in a state in which a surface of the infeed conveyor contacting the bags is instantaneously removed;
FIG. 4 is a front elevation view showing the orientation of the bags when the bags drop from the infeed conveyor in a case where the surface of the infeed conveyor contacting the bags is instantaneously removed;
FIG. 5 is an explanatory diagram showing the operation of a leading end portion of the infeed conveyor before and after the extension and retraction amount of the leading end portion of the infeed conveyor is changed;
FIG. 6A is a plan view of the article conveyance device aligning, on an article alignment unit, six bags as one article group by means of just an operation where a leading end portion roller and an intermediate roller of the infeed conveyor return to an original position after a first operation;
FIG. 6B is a plan view of the article group when the six bags have been aligned as one article group on the article alignment unit as a result of the leading end portion roller and the intermediate roller of the infeed conveyor repeatedly alternating between the first operation and a second operation;
FIG. 7A is a plan view showing a state in which the article group of FIG. 6A has stood up on a third alignment conveyor;
FIG. 7B is a plan view showing a state in which the article group of FIG. 6B has stood up on the third alignment conveyor;
FIG. 8A is a plan view of the article conveyance device guiding the bag that becomes the front of the article group to its landing position;
FIG. 8B is a plan view of the article conveyance device guiding the bag that becomes second from the front of the article group to its landing position; and
FIG. 8C is a plan view of the article conveyance device guiding the bag that becomes third from the front of the article group to its landing position.

### DETAILED DESCRIPTION

An embodiment of the invention will be described below with reference to the drawings. It will be noted that the following embodiment is a specific example of the invention and is not intended to limit the technical scope of the invention.

### 1. Configuration of Box Packing System 1

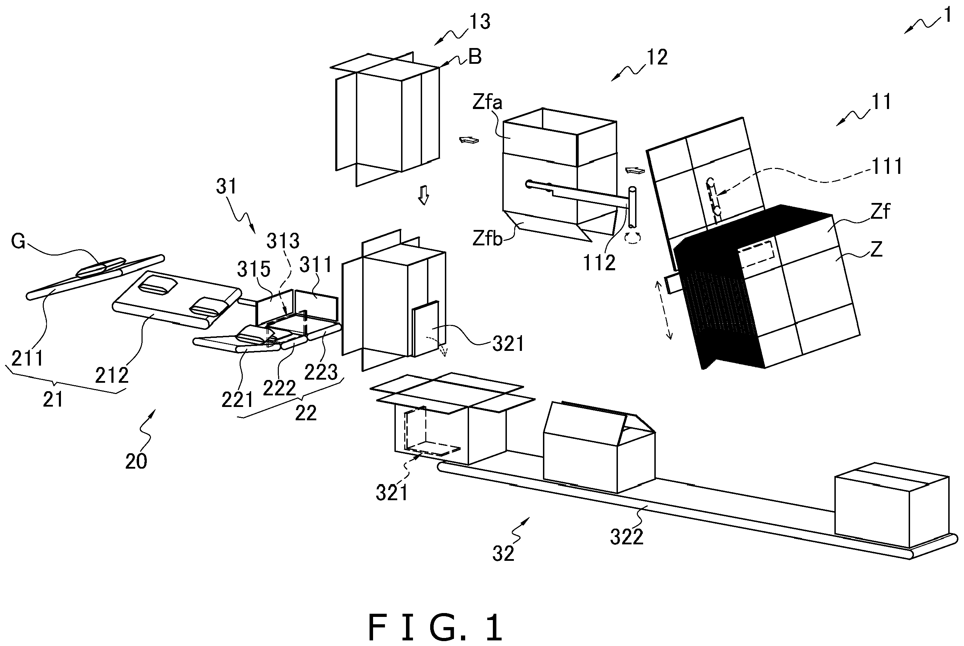

FIG. 1 is a perspective view showing a flow of cardboard boxes B and articles in a box packing system 1 equipped with an article conveyance device 20 pertaining to one embodiment of the invention. The box packing system 1 is mainly configured by a box material infeed unit 11, a box erection unit 12, a box downward conveyance unit 13, an article infeed unit 21, an article alignment unit 22, a box packing unit 31, and a box conveyance unit 32. The article conveyance device 20 is configured by the article infeed unit 21 and the article alignment unit 22.

### 1.1 Box Material Infeed Unit

In the box material infeed unit 11, as shown in FIG. 1, a lift mechanism 111 picks one at a time and feeds upward a cardboard box material Z at the very front of a stack of cardboard box materials Z stacked in a supply position. Thereafter, a sucking and rotating mechanism 112 rotates the fed cardboard box material Z by 90° about a vertical axis to thereby open it into a tubular shape.

### 1.2 Box Erection Unit 12

The box erection unit 12 conveys in a horizontal direction the cardboard box material Z that has been opened into a tubular shape and at the same time folds and tapes bottom flaps Zfb of the cardboard box material Z to thereby erect a cardboard box B with its top flaps Zfa open.

### 1.3 Box Downward Conveyance Unit 13

The box downward conveyance unit 13 rotates the cardboard box B by 90° about a horizontal axis orthogonal to the conveyance direction to thereby change the orientation of the cardboard box B so that the opening and the top flaps Zfa of the cardboard box B lie in the same vertical plane, and then conveys the cardboard box B downward.

### 1.4 Article Infeed Unit 21

The article infeed unit 21 has an article introduction conveyor 211 and an infeed conveyor 212. The article introduction conveyor 211 receives, on the downstream side of a process that performs weight, seal, and contamination inspections, a supply of bags G that have passed the inspections and guides the bags G to the infeed conveyor 212.

In a case where the bags G are stand-up pouches, the bags G move on the infeed conveyor 212 in an orientation where the thicker end portions (bottom portions) of the pouches face the downstream side in the conveyance direction.

The infeed conveyor 212 conveys to the article alignment unit 22 the bags G conveyed thereto from the article introduction conveyor 211. It will be noted that the infeed conveyor 212 will be described in detail in the latter half of this specification.

### 1.5 Article Alignment Unit 22

The article alignment unit 22 has a first alignment conveyor 221, a second alignment conveyor 222, and a third alignment conveyor 223.

Each time the first alignment conveyor 221 catches one bag G, it conveys that bag G a fixed distance T toward the second alignment conveyor 222. Therefore, the bag G moves the fixed distance T closer to the second alignment conveyor 222 from the position to which it dropped. Meanwhile, part of the bag G that drops thereafter lands on the first alignment conveyor 221 while the remaining part leans against the preceding bag G and becomes inclined.

Furthermore, the bags G on the first alignment conveyor 221 and the second alignment conveyor 222 form a line in such a way that mutually adjacent bags partially lie on top of each other.

After the bag G at the rear of the line lands on the first alignment conveyor 221, the second alignment conveyor 222 and the third alignment conveyor 223 start operating, and the first alignment conveyor 221, the second alignment conveyor 222, and the third alignment conveyor 223 perform a conveyance operation in the same direction. Therefore, N-number of the bags G aligned in a line on the first alignment conveyor 221 and the second alignment conveyor 222 move in unison to the third alignment conveyor 223 and advance on the third alignment conveyor 223.

### 1.6 Box Packing Unit 31

The box packing unit 31 sandwiches the front and rear of the group of bags G aligned in a line on the third alignment conveyor 223 and inserts the whole group of bags G into the cardboard box B. As shown in FIG. 1, the box packing unit 31 has a blocking plate 311, a push plate 313, and an insertion plate 315 to sandwich the aligned group of bags G.

The blocking plate 311 is provided on the downstream end of the third alignment conveyor 223 and blocks the advance of the bags G forming a line and being conveyed thereto. The blocking plate 311 is disposed in such a way that its flat surface portion is always orthogonal to the conveyance direction of the bags G.

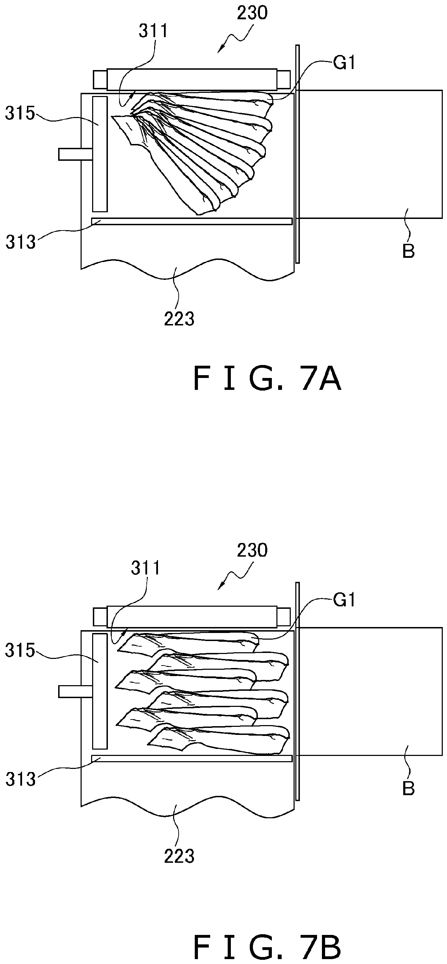

In the present embodiment, the blocking plate 311 is configured by an endless belt of a vertically erect conveyor, and the endless belt moves in the vertical direction, so the bag G at the front of the article group switches to a standing orientation when it contacts the blocking plate 311 (see FIG. 7A and FIG. 7B).

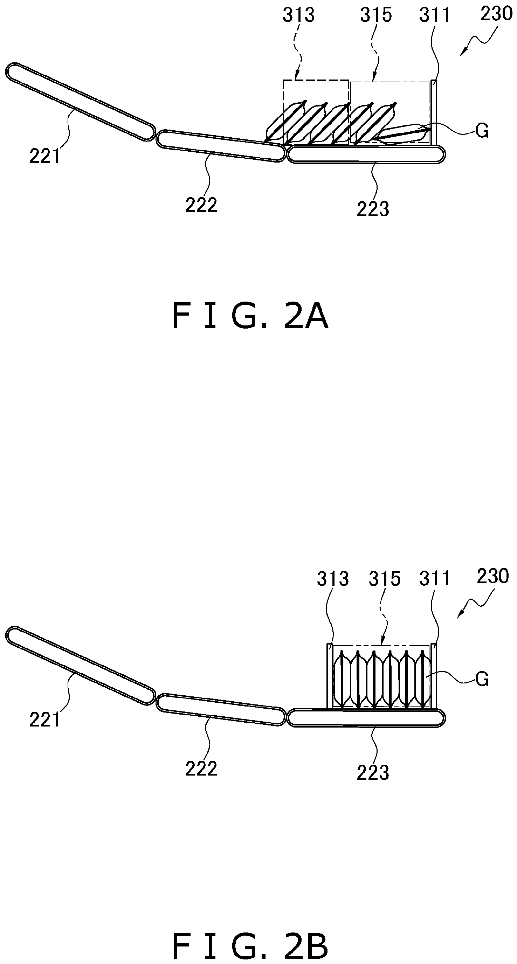

FIG. 2A is a front elevation view seen from a horizontal direction orthogonal to the conveyance direction of the aligned group of bags G. Furthermore, FIG. 2B is a front elevation view of a state in which the aligned group of bags G of FIG. 2A has been stood up. Referring to FIG. 2A and FIG. 2B, the push plate 313 pushes the rear of the N-number of bags G aligned in a line to thereby sandwich the bags G between itself and the blocking plate 311 and cause the bags G to stand up.

The push plate 313 is provided on the upstream end of the third alignment conveyor 223, but while the line of bags G is moving from the second alignment conveyor 222 to the third alignment conveyor 223, the push plate 313 is housed on the side of the third alignment conveyor 223 so that its flat surface portion is parallel to the conveyance direction of the bags G. Furthermore, when the bag G at the rear of the line has completely transferred from the second alignment conveyor 222 to the third alignment conveyor 223, the push plate 313 swings so that its flat surface portion becomes orthogonal to the conveyance direction of the bags G. Moreover, the push plate 313 pushes the bag G at the rear of the line to thereby move the entire line toward the blocking plate 311.

At this time, because the vertical surface of the blocking plate 311 is a vertically moving endless belt, the bag G at the front of the line stands up along the vertical surface of the blocking plate 311, and the next bag G stands up along the bag at the front that has been stood up. The trailing bags G also sequentially stand up by the same operation, so the N-number of bags G align in a standing state.

In the present embodiment, the third alignment conveyor 223, the blocking plate 311, and the push plate 313 configure a stand-up unit 230.

Furthermore, the box packing unit 31 collectively pushes, via the insertion plate 315, the N-number of bags G in the standing state into the cardboard box B. The insertion plate 315 is positioned opposite the position of the cardboard box B across the third alignment conveyor 223. When seen from the second alignment conveyor 222 side, the open surface of the cardboard box B is positioned on the right side of the third alignment conveyor 223 and the insertion plate 315 is positioned on the left side of the third alignment conveyor 223.

The insertion plate 315 waits with its flat surface portion opposing the opening of the cardboard box B, and after the N-number of bags G switch to the standing state, the insertion plate 315 pushes them toward the open surface of the cardboard box B and in one fell swoop inserts the N-number of bags G through the opening to the bottom of the cardboard box B. The insertion plate 315 crosses between the blocking plate 311 and the push plate 313 and advances to the open surface of the cardboard box B.

### 1.7 Box Conveyance Unit 32

The box conveyance unit 32 has an orientation changing mechanism 321 that changes the orientation of the cardboard box B packed with the bags G and a discharge conveyor 322 that conveys the cardboard boxes B.

The orientation changing mechanism 321 rotates the cardboard box B so that the open surface faces up and places the cardboard box B on the discharge conveyor 322. The discharge conveyor 322 conveys the cardboard box B to a predetermined position.

### 2. Adjusting Landing Positions of Bags G

Each time the first alignment conveyor 221 catches one bag G, it conveys that bag G the fixed distance T toward the second alignment conveyor 222, so part of the bag G lands on the first alignment conveyor 221 while the remaining part leans against the preceding bag G and becomes inclined, and the bags G form a line in such a way that mutually adjacent bags partially lie on top of each other.

Furthermore, when the bag G drops in a horizontal orientation, the trailing bag G sometimes bounces in a direction different from its intended position because it drops directly on the upper surface of the waiting bag G, so to inhibit this, in the present embodiment the infeed conveyor 212 is inclined in such a way that the bags G have an orientation suited for landing on the first alignment conveyor 221 from the stage when the bags G are being conveyed by the infeed conveyor 212.

### 2.1 Extension and Retraction of Leading End Portion of Infeed Conveyor 212

In the present embodiment, when the bags G reach a predetermined position on the infeed conveyor 212, the surface of the infeed conveyor 212 contacting the bags G is instantaneously removed, whereby the bags G drop while maintaining the orientation that they had while they were being conveyed.

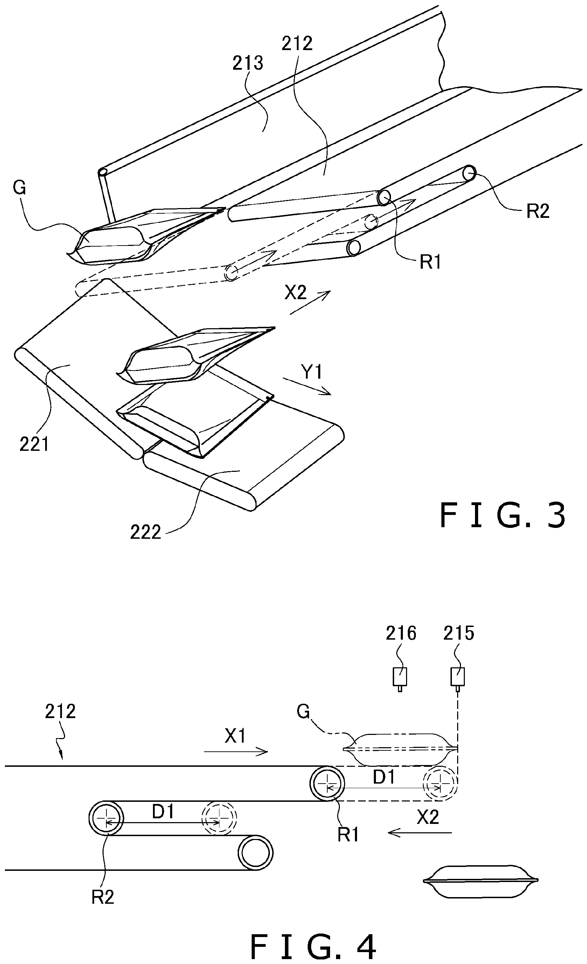

FIG. 3 is a perspective view of the infeed conveyor 212, the first alignment conveyor 221, and the second alignment conveyor 222 in a state in which the surface of the infeed conveyor 212 contacting the bags G is instantaneously removed.

FIG. 4 is a front elevation view of the orientation of the bags G when the bags G drop from the infeed conveyor 212 in a case where the surface of the infeed conveyor 212 contacting the bags G is instantaneously removed.

Referring to FIG. 3 and FIG. 4, when the bags G are conveyed to the downstream side of the infeed conveyor 212 and a first sensor 215 (or a second sensor 216) detects that the leading end portions of the bags G have reached the leading end portion of the infeed conveyor 212, a leading end portion roller R1 of the infeed conveyor 212 moves a distance D1 in an X2 direction opposite the conveyance direction (X1 direction). At this time, an intermediate roller R2 of the infeed conveyor 212 also moves the distance D1 in the X2 direction in conjunction therewith, thereby absorbing slack in the conveyor belt when the leading end portion roller R1 moves in the X2 direction.

Because the leading end portion of the infeed conveyor 212 instantaneously moves to the upstream side of the bags G, the bags G suddenly lose the drag from the conveyance surface of the infeed conveyor 212 but due to inertia maintain the orientation that they had while they were being conveyed.

Therefore, the bags G easily maintain their orientation when they leave the infeed conveyor 212, and disturbances in orientation when the bags G land on the first alignment conveyor 221 is inhibited.

### 2.2 Changing Extension and Retraction Amount of Leading End Portion of Infeed Conveyor 212

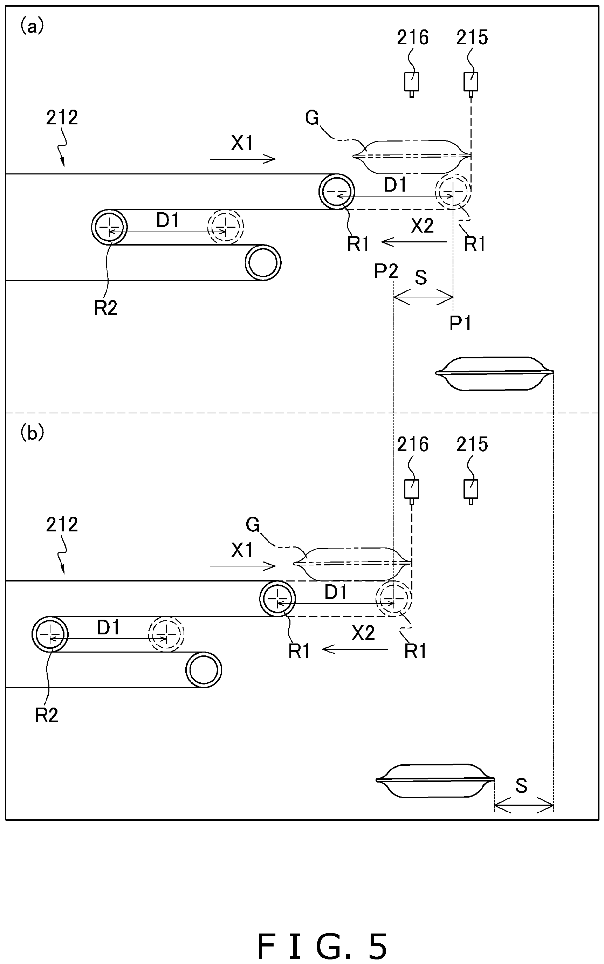

In the present embodiment, the extension and retraction amount of the leading end portion of the infeed conveyor 212 can be changed. FIG. 5 is an explanatory diagram showing the operation of the leading end portion of the infeed conveyor 212 before and after the extension and retraction amount of the leading end portion of the infeed conveyor 212 is changed.

In the present embodiment, all operations including the operation of the leading end portion of the infeed conveyor 212 are controlled by a control unit 50.

The upper half (a) of FIG. 5 describes the operation of the infeed conveyor 212 with respect to the bag G that is Nth, and the lower half (b) of FIG. 5 describes the operation of the infeed conveyor 212 with respect to the bag G that is N+1th.

### 2.2.1 First Operation

Referring to the upper half (a) of FIG. 5, when the first sensor 215 detects that the leading end portion of the bag G that is Nth has reached the leading end portion of the infeed conveyor 212, the leading end portion roller R1 and the intermediate roller R2 of the infeed conveyor 212 instantaneously move the distance D1 in the X2 direction from an original position P1. Up to this point is a first operation.

### 2.2.2 Second Operation

Referring to the lower half (b) of FIG. 5, the leading end portion roller R1 and the intermediate roller R2 of the infeed conveyor 212 return to a second position P2 a distance S in the X2 direction from the original position P1 and wait for the bag G that is N+1th to reach the leading end portion of the infeed conveyor 212.

Then, when the second sensor 216 detects that the leading end portion of the bag G that is N+1th has reached the leading end portion of the infeed conveyor 212, the leading end portion roller R1 and the intermediate roller R2 of the infeed conveyor 212 instantaneously move the distance D1 in the X2 direction and thereafter return to the original position P1.

The bag G that is Nth and the bag G that is N+1th have the same initial velocity when they leave the infeed conveyor 21. Furthermore, the position where the bag G that is N+1th leaves the infeed conveyor 212 is a distance S on the upstream side in the conveyance direction of the position where the bag G that is Nth leaves the infeed conveyor 212.

Therefore, the position where the bag G that is N+1th lands on the first alignment conveyor 221 is offset the distance S in the X2 direction (the opposite direction of the X1 direction) from the position where the bag G that is Nth lands on the first alignment conveyor 221.

As a result, on the first alignment conveyor 221, the bag G that is Nth and the bag G that is N+1th overlap in a state in which they are offset from each other the distance S in the X1 direction and the distance T in a Y1 direction.

After the infeed conveyor 212 conveys the bag G that is N+1th, the leading end portion roller R1 and the intermediate roller R2 move the distance S in the X1 direction and wait for the bag G that is N+2th to reach the leading end portion of the infeed conveyor 212. Up to this point is a second operation.

From then on, the infeed conveyor 212 repeats the first operation and the second operation to overlap the bags G on the first alignment conveyor 221.

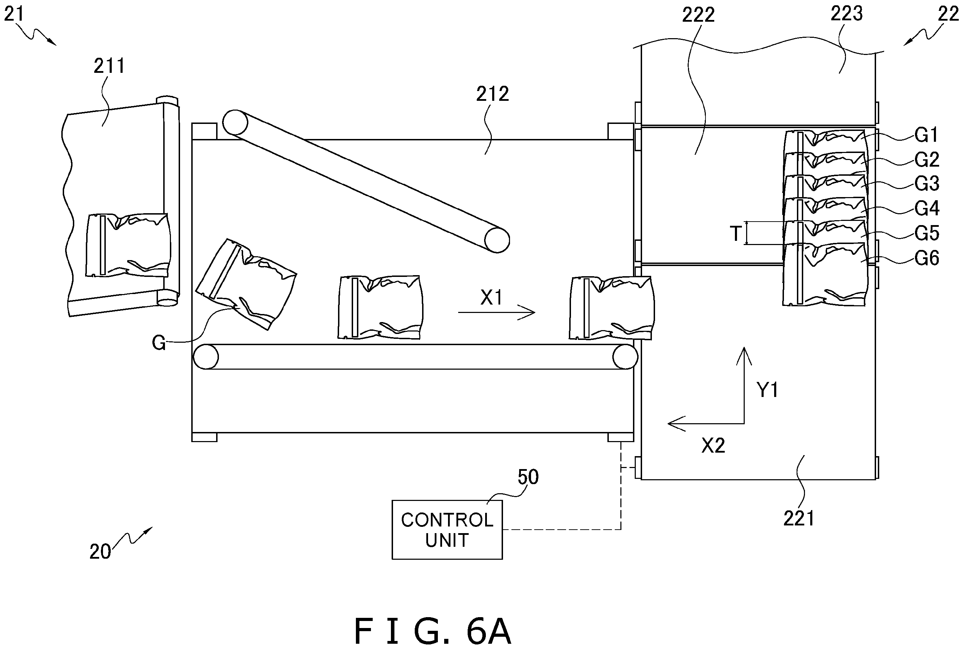

FIG. 6A is a plan view of the article conveyance device aligning, on the article alignment unit 22, six bags G as one article group by means of just an operation where the leading end portion roller R1 and the intermediate roller R2 of the infeed conveyor 212 return to the original position after the first operation.

Referring to FIG. 6A, the leading end portion roller R1 and the intermediate roller R2 of the infeed conveyor 212 repeatedly instantaneously move the distance D1 and return, so the six bags G overlap in a state in which they are offset the distance T from each other in the Y1 direction.

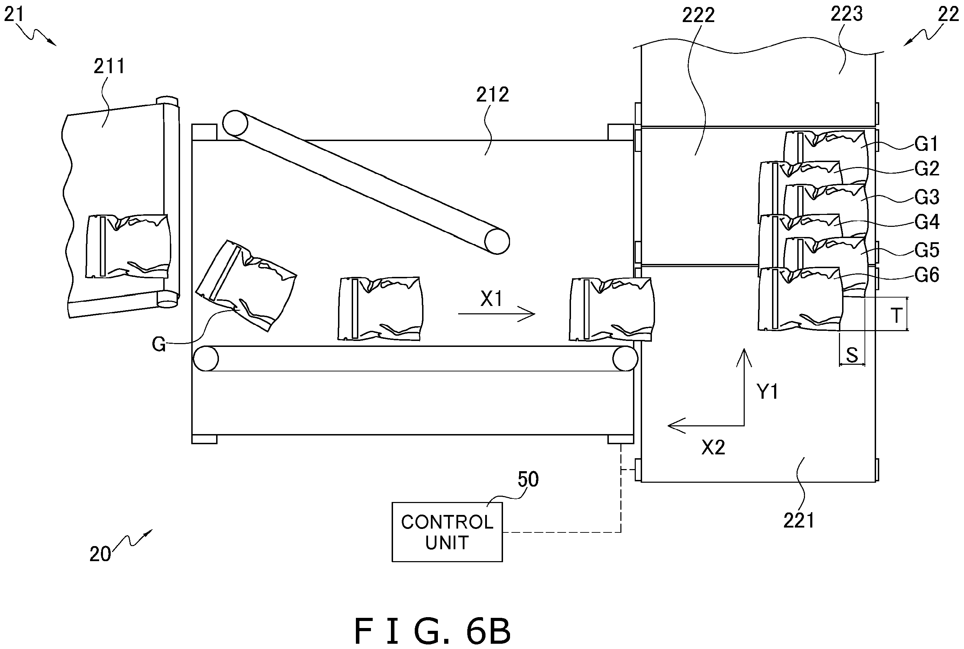

FIG. 6B is a plan view of the article group when the six bags G have been aligned as one article group on the article alignment unit 22 as a result of the leading end portion roller R1 and the intermediate roller R2 of the infeed conveyor 212 repeatedly alternating between the first operation and the second operation.

Referring to FIG. 6B, each of the six bags G is shifted the distance T in the Y1 direction and, counting from the bag G1 at the front of the six bags G, the bag G2, the bag G4, and the bag G6 that are even-numbered and the bag G1, the bag G3, and the bag G5 that are odd-numbered overlap in a state in which they are offset from each other the distance S in the X1 direction.

### 3. Behavior of Article Group during Box Packing

FIG. 7A is a plan view showing a state in which the article group of FIG. 6A has stood up on the third alignment conveyor 223.

Referring to FIG. 7A, along the bag G1 that has initially stood up, the trailing bags G sequentially stand up. However, because the bags G each have a shape where the one end portion that becomes the bottom of the bag is thick while the other end portion is thin, the six bags G gather together in the shape of a fan.

Therefore, when the insertion plate 315 pushes the article group that has gathered together in the shape of a fan and tries to insert it into the cardboard box B, each of the bags G in the article group scatters before being inserted into the cardboard box B, and their standing orientation collapses.

FIG. 7B is a plan view showing a state in which the article group of FIG. 6B has stood up on the third alignment conveyor 223.

Referring to FIG. 7B, the bags G that are even-numbered and the bags G that are odd-numbered stand up on the third alignment conveyor 223 while remaining overlapped in the state in which they are offset the distance S from each other in the X1 direction. Therefore, the thick portions of the bags G do not overlap, so the orientation of the bags G when the bags G stand up is stable, and a collapse in orientation during box packing is inhibited.

As described above, in the present embodiment, the leading end portion roller R1 and the intermediate roller R2 of the infeed conveyor 212 repeatedly alternate between the first operation and the second operation to align the plural bags G on the article alignment unit 22, so the orientation of the bags when the bags stand up is stable, and a collapse in orientation during box packing is inhibited.

### 4. Characteristics

4.1
The article conveyance device 20 includes the article infeed unit 21, the article alignment unit 22, and the control unit 50. The article infeed unit 21 conveys the bags G in the X1 direction. The article alignment unit 22 is disposed downstream of the article infeed unit 21 in the X1 direction, receives the bags G conveyed by the article infeed unit 21, and conveys the bags G in the Y1 direction intersecting the X1 direction. The control unit 50 controls conveyance operations of the article infeed unit 21 and the article alignment unit 22 to form on the conveyance surface of the article alignment unit 22 an article group where the bag G that is Nth and the bag G that is N+1th overlap in a state in which they are offset from each other in the X1 direction and the Y1 direction.

As a result, in the article conveyance device 20, even when the articles are the bags G whose upper end portions are thinner than their lower end portions such as stand-up pouch bags, the bags G are offset from each other in the X1 direction, whereby the thick portions of the bags that are adjacent to the thin portions of the bags G overlap in a state in which the bags G are aligned and accumulated as the article group, so the orientation of the bags G when the bags G stand up is stable, and a collapse in orientation during box packing is inhibited.

4.2
In the article conveyance device 20, the infeed conveyor 212 of the article infeed unit 21 is an extendible and retractable shuttle conveyor. The control unit 50 forms the article group on the conveyance surface of the article alignment unit 22 by causing the roller R1 of the conveyance terminal end portion of the infeed conveyor 212 to extend and retract parallel to the X1 direction.

In the article conveyance device 20, the landing positions of the bags G on the article alignment unit 22 differ between a case where a timing of retracting the roller R1 is early and a case where the timing is late. This can be utilized to overlap the bags G in a state in which they are offset from each other in the X1 direction.

4.3
In the article conveyance device 20, the control unit 50 controls the extension and retraction amount of the roller R1 to adjust the offset amount in the X1 direction between the bag G that is Nth and the bag G that is N+1th.

4.4
In the article conveyance device 20, the offset amount in the X1 direction between the bag G1 at the front of the article group, the third bag G3, and the fifth bag G5 and the second bag G2, the fourth bag G4, and the sixth bag G6 is 15% or more of the length of the articles. As an example, the offset amount in the X1 direction is about 1/3.

In the article conveyance device, in the case of the bags G whose upper end portions are thinner than their lower end portions such as stand-up pouch bags, the bags G are offset from each other 15% or more of the length of the articles in the X1 direction. Because of this, the thick portions of the bags G overlap the thin portions of the bags G to which they are adjacent or the thick portions of the bags G that are adjacent do not overlap in a state in which the bags G are aligned and accumulated as the article group, so the orientation of the bags when the bags stand up is stable, and a collapse in orientation during box packing is inhibited.

4.5
In the article conveyance device 20, the control unit 50 switches between either of the first state and the second state in accordance with a product selection pertaining to the articles. The first state is a state in which the bag G1 at the front of the article group, the third bag G3, and the fifth bag G5 and the second bag G2, the fourth bag G4, and the sixth bag G6 are offset the distance S from each other in the X1 direction and where the bags G that are adjacent to each other in the Y1 direction in the article group are offset the distance T from each other in the Y1 direction. The second state is a state in which the bags G that are adjacent to each other in the Y1 direction in the article group are offset the distance T from each other in the Y1 direction.

In the article conveyance device 20, the control unit 50 automatically switches between the first state and the second state in accordance with the product, so there are no switching mistakes.

4.6
In the article conveyance device 20, the stand-up unit 230 causes the article group to stand up by sandwiching, from its front and rear, the article group conveyed by the article alignment unit 22.

In the article conveyance device 20, the article group where, as seen from the front of the article group, the bag G1, the bag G3, and the bag G5 that are odd-numbered and the bag G2, the bag G4, and the bag G6 that are even-numbered overlap in a state in which they are offset the distance S from each other in the X1 direction and where the bags that are adjacent in the Y1 direction overlap in a state in which they are offset the distance T from each other in the Y1 direction is formed, so the orientation of the article group is inhibited from collapsing when the bags stand up.

4.7
In the article conveyance device 20, even when the insertion plate 315 pushes off the article group stood up by the stand-up unit 230 in a direction in which it causes the article group to leave the stand-up unit 230 and packs the article group in the cardboard box B, the orientation of the article group is inhibited from collapsing.

4.8
In the article conveyance device 20, the bags G comprise bags with a shape whose thickness on the upstream side is thinner than its thickness on the downstream side in the X1 direction.

4.9
In the article conveyance device 20, the control unit 50 further controls the conveyance operations of the article infeed unit 21 and the article alignment unit 22 to form on the conveyance surface of the article alignment unit 22 the article group where the odd-numbered bags G and the even-numbered bags G that are adjacent to each other as seen from the front of the article group are offset from each other the distance S in the X1 direction and the distance T in the Y1 direction, the odd-numbered bags G as seen from the front of the article group are in positions that substantially coincide with each other in the X1 direction, the even-numbered bags G as seen from the front of the article group are in positions that substantially coincide with each other in the X1 direction, and any three bags G that are consecutive as seen from the front of the article group are alternately offset from each other the distance S in the X1 direction and overlap.

### 5. First Example Modification

In the above embodiment, the landing positions of the bags G on the first alignment conveyor 221 are switched by alternately changing the position at which the bags G leave the leading end portion of the infeed conveyor 212. However, because the bags G drop of their own accord after leaving the leading end portion of the infeed conveyor 212, the bags G do not always land in their target positions.

A first example modification provides an article conveyance device 120 that guides the bags G so that the bags G can land in their target positions on the first alignment conveyor 221.

### 5.1 Guide Unit 40

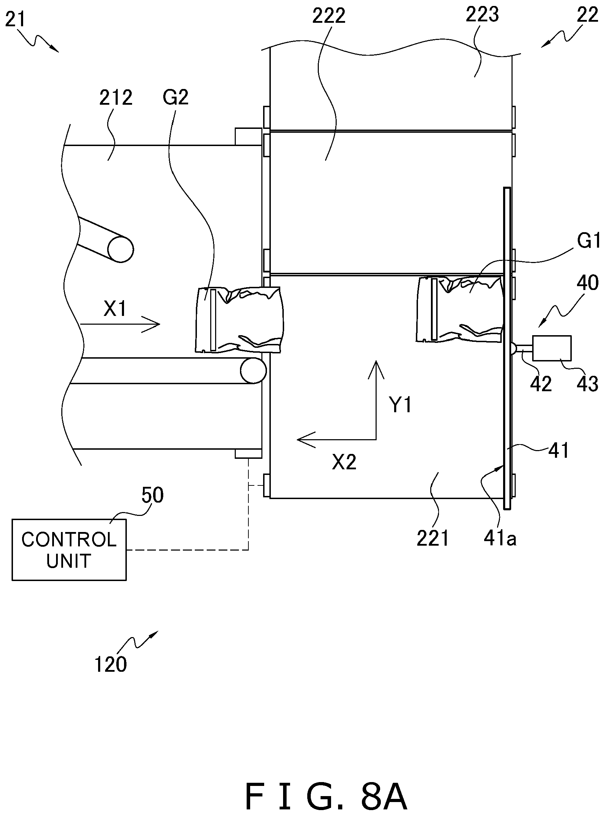

FIG. 8A is a plan view of the article conveyance device 120 guiding the bag G1 that becomes the front of the article group to its landing position. The article conveyance device 120 differs from the article conveyance device 20 pertaining to the above embodiment in that it includes a guide unit 40. Therefore, here, only the configuration and operation of the guide unit 40 will be described.

Referring to FIG. 8A, the guide unit 40 has a movable guide plate 41, an output shaft 42, and a drive mechanism 43.

### 5.1.1 Movable Guide Plate 41

The movable guide plate 41 is a plate-like member that has a vertical surface 41a. The movable guide plate 41 can move in the X1 direction or the X2 direction at a height position that is a predetermined distance upward from the conveyance surface of the article alignment unit 22.

The movable guide plate 41 uses the vertical surface 41a to stop the horizontal direction movement of the bags G leaving and radially dropping from the leading end portion of the infeed conveyor 212 and guides the bags G along the vertical surface 41a to vertically downward landing positions.

### 5.1.2 Output Shaft 42

The output shaft 42 is coupled to the back surface of the movable guide plate 41 on the opposite side of the vertical surface 41a. The output shaft 42 is extendible and retractable.

### 5.1.3 Drive Mechanism 43

The drive mechanism 43 causes the output shaft 42 to extend and retract. A motor or an air cylinder is employed as a power source for the drive mechanism 43.

### 5.2 Operation of Guide Unit 40

When the bag G1 that becomes the front of the article group leaves the leading end portion of the infeed conveyor 212, it hits the vertical surface 41a of the movable guide plate 41 while radially dropping of its own accord, descends along the vertical surface 41a, and lands on the first alignment conveyor 221 as shown in FIG. 8A. Thereafter, the first alignment conveyor 221 conveys the bag G1 the distance T in the Y1 direction and stops.

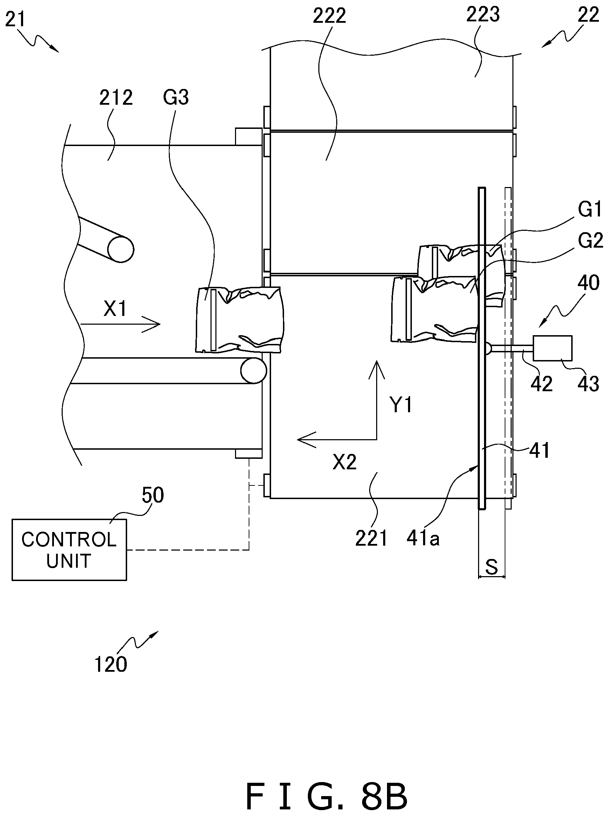

FIG. 8B is a plan view of the article conveyance device 120 guiding the bag G2 that becomes second from the front of the article group to its landing position. Referring to FIG. 8B, the drive mechanism 43 of the guide unit 40 extends the output shaft 42 to move the movable guide plate 41 the distance S in the X2 direction and then waits.

When the bag G2 leaves the leading end portion of the infeed conveyor 212, it hits the vertical surface 41a of the movable guide plate 41 while radially dropping of its own accord, descends along the vertical surface 41a, and lands in a state in which part of the bag G2 overlaps the top of the bag G1 as shown in FIG. 8B.

The bag G1 and the bag G2 are offset from each other the distance T in the Y1 direction and the distance S in the X1 direction. Thereafter, the first alignment conveyor 221 conveys the bag G1 and the bag G2 the distance T in the Y1 direction and stops.

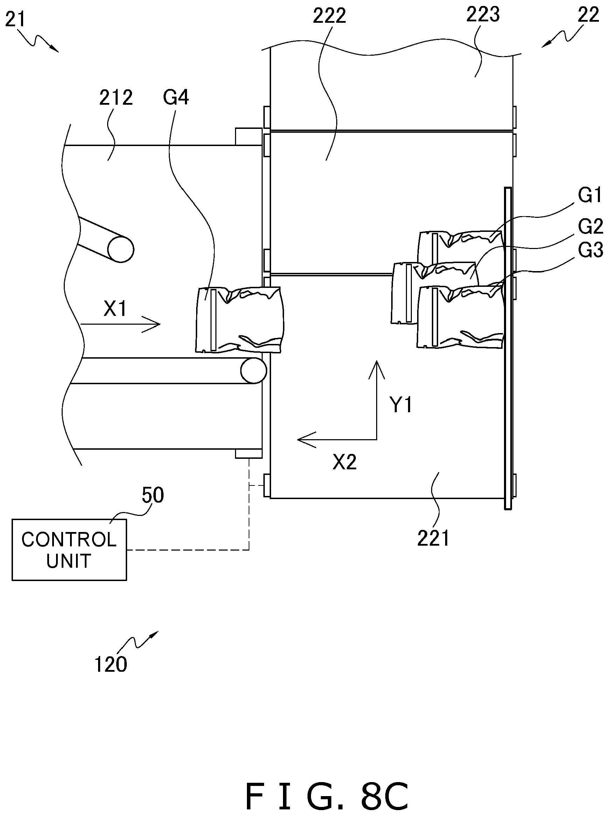

FIG. 8C is a plan view of the article conveyance device 120 guiding the bag G3 that becomes third from the front of the article group to its landing position. Referring to FIG. 8C, the drive mechanism 43 of the guide unit 40 retracts the output shaft 42 to move the movable guide plate 41 the distance S in the X1 direction (the opposite direction of the X2 direction) and then waits.

When the bag G3 leaves the leading end portion of the infeed conveyor 212, it hits the vertical surface 41a of the movable guide plate 41 while radially dropping of its own accord, descends along the vertical surface 41a, and lands in a state in which part of the bag G3 overlaps the top of the bag G2 as shown in FIG. 8C.

The bag G2 and the bag G3 are offset from each other the distance T in the Y1 direction and the distance S in the X1 direction. Thereafter, the first alignment conveyor 221 conveys the bag G1, the bag G2, and the bag G3 the distance T in the Y1 direction and stops.

From then on, the above operations are repeated to align the trailing bags G. The article conveyance device 120 pertaining to the first example modification can use the working of the guide unit 40 to realize, more accurately than in the above embodiment, a state in which, using the front of the article group as a reference, the positions of the bottoms of the odd-numbered bags G and the positions of the bottoms of the even-numbered bags G are the distance S away from each other as seen in a plan view.

### 5.3 Characteristics of First Example Modification

In the article conveyance device 120, the movable guide plate 41 of the guide unit 40 guides the bags G by reciprocating along and parallel to the X1 direction or the X2 direction over the conveyance surface of the article alignment unit 22.

In the article conveyance device 120, the positions to which the guide unit 40 guides the bags G and causes them to land on the conveyance surface of the article alignment unit 22 differ between a case where the movable guide plate 41 of the guide unit 40 is sticking out over the conveyance surface of the article alignment unit 22 and a case where it is not. This can be utilized to overlap the bags G in a state in which they are offset from each other in the X1 direction.

### 6. Second Example Modification

In the above embodiment, the landing positions of the bags G are changed by changing the extension and retraction amount of the leading end portion of the infeed conveyor 212, but the invention is not limited to this.

For example, in the article conveyance devices 20, 120, the control unit 50 may form the article group on the conveyance surface of the article alignment unit 22 by varying the speed at which the infeed conveyor 212 of the article infeed unit 21 conveys the bags G.

In the article conveyance devices 20, 120, the faster the conveyance speed is, the faster the discharge speed of the articles discharged from the conveyance terminal end portion of the infeed conveyor 212 becomes. The landing positions of the bags G on the article alignment unit 22 differ between a case where the discharge speed of the bags G discharged from the conveyance terminal end portion of the infeed conveyor 212 is slow and a case where it is fast. This can be utilized to overlap the articles in a state in which they are offset from each other in the X1 direction.

### 7. Third Example Modification

In the above embodiment, the bag G1 to the bag G4 are overlapped in a state in which they are alternately offset from each other one bag at a time in the X1 direction, but the invention is not limited to this.

For example, the bag G1 and the bag G2 may be offset from each other the distance T in the Y1 direction and the distance S in the X1 direction, and the bag G2 and the bag G3 may be offset from each other the distance T in the Y1 direction and a further distance S in the X1 direction. The bag G4 may be offset from the bag G3 a further distance T in the Y1 direction but be in the same position as the bag G2 in the X1 direction, with this being repeated from then on so that the bags can be overlapped.

### 8. Fourth Example Modification

In the above embodiment, the bags G are stand-up pouch bags, but they are not limited to this. Excellent effects can be exhibited in the same way also in regard to bags with an ordinary shape that contain imbalanced contents and bags having wide tabs or zipper seals.

### Reference Signs List

- 1: Box Packing System
- 20: Article Conveyance Device
- 21: Article Infeed Unit (First Conveyance Unit)
- 22: Article Alignment Unit (Second Conveyance Unit)
- 50: Control Unit
- 40: Guide Unit
- 41: Movable Guide Plate (Guide Unit)
- 42: Output Shaft (Guide Unit)
- 43: Drive Mechanism (Guide Unit)
- 212: Infeed Conveyor (First Conveyance Unit)
- 221: First Alignment Conveyor (Second Conveyance Unit)
- 222: Second Alignment Conveyor (Second Conveyance Unit)
- 223: Third Alignment Conveyor (Second Conveyance Unit, Stand-up Unit)
- 230: Stand-up Unit
- 311: Blocking Plate (Stand-up Unit)
- 313: Push Plate (Stand-up Unit)
- 315: Insertion Plate (Push Unit)
- G: Bag (Article)
- X1: First Direction
- Y1: Second Direction

### Citation List

### Patent Literature

Patent Document 1: JP-A No. 2010-155648

## Claims

1. An article conveyance device comprising:
a first conveyance unit that conveys articles in a first direction;
a second conveyance unit that is disposed downstream of the first conveyance unit in the first direction, receives the articles conveyed by the first conveyance unit, and conveys the articles in a second direction intersecting the first direction; and
a control unit that controls conveyance operations of the first conveyance unit and the second conveyance unit to form on a conveyance surface of the second conveyance unit an article group where the article that is Nth and the article that is N+1th overlap in a state in which they are offset from each other in the first direction and the second direction.

2. The article conveyance device of claim 1, wherein
the first conveyance unit is an extendible and retractable shuttle conveyor, and
the control unit forms the article group on the conveyance surface by causing a conveyance terminal end portion of the first conveyance unit to extend and retract parallel to the first direction.

3. The article conveyance device of claim 2, wherein the control unit controls the extension and retraction amount of the conveyance terminal end portion to adjust an offset amount in the first direction between the article that is the Nth and the article that is the N+1th.

4. The article conveyance device of claim 1, wherein the control unit forms the article group on the conveyance surface of the second conveyance unit by varying a speed at which the first conveyance unit conveys the articles.

5. The article conveyance device of claim 1, further comprising a guide unit that guides the articles by reciprocating along and parallel to the first direction over the conveyance surface of the second conveyance unit.

6. The article conveyance device of any one of claim 1 to claim 5, wherein the offset amount in the first direction between the article that is the Nth and the article that is the N+1th is 15% or more of the length of the articles.

7. The article conveyance device of any one of claim 1 to claim 5, wherein the control unit switches, in accordance with a product selection pertaining to the articles, between either of
a first state that is a state in which the article that is the Nth and the article that is the N+1th are offset from each other in the first direction and the second direction and
a second state that is a state in which the article that is the Nth and the article that is the N+1th are offset from each other only in the second direction.

8. The article conveyance device of any one of claim 1 to claim 5, further comprising a stand-up unit that is disposed downstream of the second conveyance unit in the second direction and causes the article group to stand up by sandwiching, from its front and rear, the article group conveyed by the second conveyance unit.

9. The article conveyance device of claim 8, further comprising a push unit that pushes off the article group stood up by the stand-up unit in a direction in which it causes the article group to leave the stand-up unit.

10. The article conveyance device of any one of claim 1 to claim 5, wherein the articles have bags with a shape whose thickness on the upstream side is thinner than its thickness on the downstream side in the first direction.

11. The article conveyance device of any one of claim 1 to claim 5, wherein the control unit further controls the conveyance operations of the first conveyance unit and the second conveyance unit to form on the conveyance surface of the second conveyance unit the article group where the article that is the N+1th and the article that is N+2th are offset from each other in the first direction and the second direction, the articles that are the Nth and the N+2th are in positions that substantially coincide with each other in the first direction, and the articles that are the Nth to the N+2th are alternately offset from each other in the first direction and overlap.
